# DEMANDE DE BREVET EUROPEEN

(11) **EP 1 084 876 A1**
(43) Date de publication de la demande: **21.03.2001**
(21) Numéro de dépôt: 00402550.8
(22) Date de dépôt: 15.09.2000
(51) Int. Cl.: B60H 1/24, B60H 3/06

(54) **Améliorations aux dispositifs de ventilation, chauffage ou climatisation d'un véhicule motorisé**

(30) Priorité: 17.09.1999 FR 9911639
(71) Demandeur: Renault, 92100 Boulogne Billancourt (FR)
(72) Inventeur: Menager, Jean-Luc, 92360 Meudon la Forêt (FR); Wallecan, Claude, 27480 Lyons La Forêt (FR); Olivier, Gérard, 783080 Bougival (FR)

(57) **Abrégé**

Dispositif (10) de ventilation, chauffage et/ou climatisation de véhicule motorisé comportant des premiers moyens d'aspiration d'air (14) pour aspirer de l'air par un conduit d'admission (13), et l'envoyer vers des moyens de traitement (15,16) de l'air aspiré propres à produire de l'air traité chaud ou climatisé, et au moins un conduit de répartition (17,18,19) de l'air dans l'habitacle du véhicule, caractérisé en ce qu'il comprend des seconds moyens d'aspiration d'air (22,29) adaptés pour pouvoir aspirer l'air de l'habitacle, lorsque les premiers moyens d'aspiration d'air (14) sont à l'arrêt.

## Description

La présente invention se rapporte au domaine technique des systèmes de ventilation, chauffage et climatisation de véhicule.

Les systèmes de ventilation, chauffage ou climatisation d'un véhicule comprennent habituellement une entrée d'air alimentée en air extérieur, un pulseur qui envoie cet air au travers de moyens de traitement de l'air, et un ou plusieurs circuits de distribution introduisant l'air dans l'habitacle par des bouches de diffusion.

Pour un système de chauffage, les moyens de traitement de l'air sont constitués par un aérotherme destiné à chauffer l'air qui le traverse. Dans le cas où le système permet la climatisation de l'air de l'habitacle du véhicule, il comprend un échangeur interne, situé habituellement entre le pulseur et l'aérotherme, et qui, lorsque l'appareil fonctionne en mode climatisation, joue le rôle d'un évaporateur et refroidit l'air qui le traverse.

Cet échangeur interne est relié à une boucle frigorifique traditionnelle comprenant un échangeur externe, un compresseur et un détendeur. Cette boucle frigorifique peut être réversible, permettant ainsi à l'échangeur interne de jouer le rôle d'un condenseur, et de réchauffer l'air qui le traverse, éventuellement en complément de l'aérotherme.

De tels systèmes présentent plusieurs désavantages : un premier désavantage consiste en ce que, lors d'un fonctionnement en mode climatisation, l'échangeur interne provoque la condensation, sur ses surfaces d'échange, ainsi que le long des parois du boîtier du système, d'une partie de la vapeur d'eau contenue dans l'air pulsé. L'ensemble de ces parois reste humide à l'arrêt , ce qui, par maintien d'une ambiance chaude et humide à l'intérieur du boîtier, favorise dans celui-ci l'apparition d'une flore microbienne, source d'odeurs désagréables qui se retrouvent envoyées dans l'habitacle à la remise en service du système de fonctionnement.

Un second désavantage provient du fait que le système de ventilation, chauffage ou conditionnement d'air, ainsi que les différentes canalisations reliées à l'extérieur ou à l'habitacle, peuvent, de par leur localisation sous la planche de bord, être portés à des températures très élevées lors d'un arrêt prolongé du véhicule au soleil. A la remise en route du système, toute la chaleur accumulée dans le système, et les différents conduits de distribution d'air, est dégagée instantanément dans l'habitacle, provoquant un réel désagrément pour les passagers.

Un troisième inconvénient est rencontré dans le cas où la boucle frigorifique fonctionne comme une pompe à chaleur, l'échangeur extérieur jouant alors le rôle d'évaporateur. La température des surfaces d'échange de celui-ci peut atteindre des valeurs très basses, et l'humidité contenue dans l'air extérieur est susceptible d'y former une couche de givre et de glace. Les performances de la boucle frigorifique s'en trouvent alors progressivement réduites, et le gaz frigorifique peut ne pas être totalement évaporé en sortie de l'échangeur extérieur. Or cette présence de fluide frigorifique sous forme liquide peut être excessivement dommageable pour le compresseur, placé en aval de l'échangeur extérieur dans la boucle frigorifique fonctionnant en pompe à chaleur et dont le fonctionnement requiert un fluide frigorifique totalement sous forme gazeuse.

Un quatrième inconvénient concerne les filtres à particules ou à odeurs qui peuvent être placés dans les conduits de distribution d'air dans l'habitacle. Les filtres à particules tendent à se colmater de façon progressive, et à provoquer, ainsi, une augmentation des pertes de charge sur le circuit d'air. De plus, les filtres à odeur ou a gaz tendent à se saturer et à perdre leur efficacité. Finalement, ces filtres deviennent inutilisables et doivent être remplacés. Il est toutefois possible de régénérer les surfaces filtrantes des filtres à gaz afin de prolonger leur durée de vie. Néanmoins, une telle régénération, pour être efficace, nécessite le passage dans le filtre d'un air réchauffé, qui, ensuite, est envoyé dans l'habitacle, et peut donc indisposer les occupants du véhicule.

Finalement, un cinquième inconvénient est propre aux systèmes de climatisation et de chauffage comportant une boucle frigorifique réversible pouvant fonctionner en mode climatisation, et en mode pompe à chaleur. En effet, en mode climatisation, l'échangeur interne, qui remplit alors la fonction d'un évaporateur, se charge d'eau par condensation, sur ses surfaces d'échange, d'une partie de l'humidité contenue dans l'air traité. Le passage à un fonctionnement de la boucle frigorifique en pompe à chaleur, pour lequel l'échangeur interne devient condenseur, entraîne une évaporation rapide de l'eau accumulée. L'air, ainsi humidifié, étant envoyé dans l'habitacle, il peut provoquer l'embuage des surfaces vitrées du véhicule encore froides.

La publication FR 2 723 038 décrit un système permettant l'évacuation vers l'extérieur de l'habitacle d'un véhicule, de l'air accumulé dans les conduits de distribution d'air et dans un système de ventilation, chauffage et climatisation. Il permet l'inversion du sens de circulation de l'air dans les conduits de distribution d'air du système de chauffage, ventilation et climatisation, grâce à deux conduits auxiliaires.

Le système décrit dans cette publication permet de résoudre la plupart des inconvénients des systèmes de ventilation, chauffage et climatisation traditionnels cités précédemment. Toutefois, il nécessite la présence de deux conduits de distribution d'air supplémentaires qui augmentent le volume global occupé par le système. En outre, il comporte différents volets mobiles associés aux conduits supplémentaires, ainsi que les moyens permettant d'actionner les volets, ce qui vient augmenter de façon conséquente le coût de fabrication du système de ventilation, chauffage et climatisation.

La publication FR 2 738 777 décrit un procédé et un dispositif pour limiter l'apparition d'odeurs dans une installation de climatisation pour véhicule automobile. Cette limitation est obtenue par l'utilisation du conduit de récupération des condensats pour dévier, au moins partiellement, le flux d'air après son passage à travers l'échangeur primaire, jouant ici le rôle d'évaporateur. Cette déviation est réalisée pendant une durée déterminée après arrêt du moteur du véhicule et/ou de l'installation.

Le procédé décrit dans cette publication permet de résoudre certains inconvénients cités précédemment. Il utilise le conduit d'évacuation des condensats pour dévier l'air traversant l'échangeur interne. Toutefois, un tel conduit n'est pas toujours présent sur les systèmes de ventilation, chauffage et climatisation. Dans un tel cas, le procédé décrit dans cette publication nécessite l'ajout d'un conduit supplémentaire. En outre, ce procédé ne permet pas d'évacuer les calories qui peuvent s'être emmagasinées, lors, par exemple, d'une exposition prolongée du véhicule au soleil, dans les conduits de distribution d'air et dans la partie du système située en aval du conduit d'évacuation des condensats, en particulier dans la zone où se situent les moyens de chauffage, ces calories se libérant dans l'habitacle au premier passage de l'air.

La présente invention vise à permettre d'obtenir un dispositif de ventilation, chauffage et climatisation permettant de résoudre l'ensemble des inconvénients cités précédemment, qui soit de conception simple et présente peu d'aménagements par rapport à un système de ventilation, chauffage et climatisation traditionnel.

Dans ce but elle propose un dispositif de ventilation, chauffage et/ou climatisation de véhicule motorisé comportant des premiers moyens pour aspirer de l'air par un conduit d'admission d'air, des moyens de traitement de l'air aspiré, et au moins un conduit de répartition de l'air dans l'habitacle du véhicule, caractérisé en ce qu'il comprend des seconds moyens d'aspiration de l'air adaptés pour pouvoir aspirer l'air de l'habitacle, lorsque les premiers moyens d'aspiration de l'air sont à l'arrêt.

Selon une autre caractéristique de l'invention, l'air aspiré par les seconds moyens d'aspiration d'air est rejeté à l'extérieur du véhicule par le conduit d'admission.

Selon une autre caractéristique de l'invention, le dispositif comprend un conduit auxiliaire relié à l'habitacle et les seconds moyens d'aspiration de l'air aspirent l'air de l'habitacle par le conduit auxiliaire.

Selon une autre caractéristique de l'invention, le conduit auxiliaire est équipé de volets souples qui obstruent le conduit auxiliaire au moins lorsque les premiers moyens d'aspiration d'air fonctionnent, et qui autorisent le passage de l'air dans le conduit auxiliaire sous l'action des seconds moyens d'aspiration.

Selon une autre caractéristique de l'invention, le conduit auxiliaire comporte des volets de réglage, actionnables par des moyens de manoeuvre, adaptés pour autoriser ou empêcher le passage de l'air dans le conduit auxiliaire selon l'action exercée sur ceux-ci par les moyens de manoeuvre.

Selon une autre caractéristique de l'invention, les seconds moyens d'aspiration d'air aspirent l'air directement par le ou les conduits de répartition.

Selon une autre caractéristique de l'invention, le dispositif comprend une chambre d'où partent le ou les conduits de répartition et en ce que les seconds moyens d'aspiration d'air sont situés à proximité de l'entrée du ou des conduits de répartition.

Selon une autre caractéristique de l'invention, les seconds moyens d'aspiration d'air sont disposés à l'intérieur d'au moins un des conduits de répartition.

Selon une autre caractéristique de l'invention, les seconds moyens d'aspiration d'air sont adaptés pour pouvoir compléter l'action des premiers moyens d'aspiration d'air lorsque ceux-ci fonctionnent.

D'autres caractéristiques et avantages de l'invention apparaîtront à la lecture de la description qui va suivre de trois modes de réalisation de la présente invention, en référence aux dessins dans lesquels :
- la figure 1 représente schématiquement le dispositif de ventilation, chauffage et climatisation selon un premier mode de réalisation de l'invention,
- la figure 2 représente schématiquement le dispositif de ventilation, chauffage et climatisation selon un second mode de réalisation de l'invention.

Les références se rapportant à des éléments identiques sont conservées pour les différents modes de réalisation du dispositif selon l'invention.

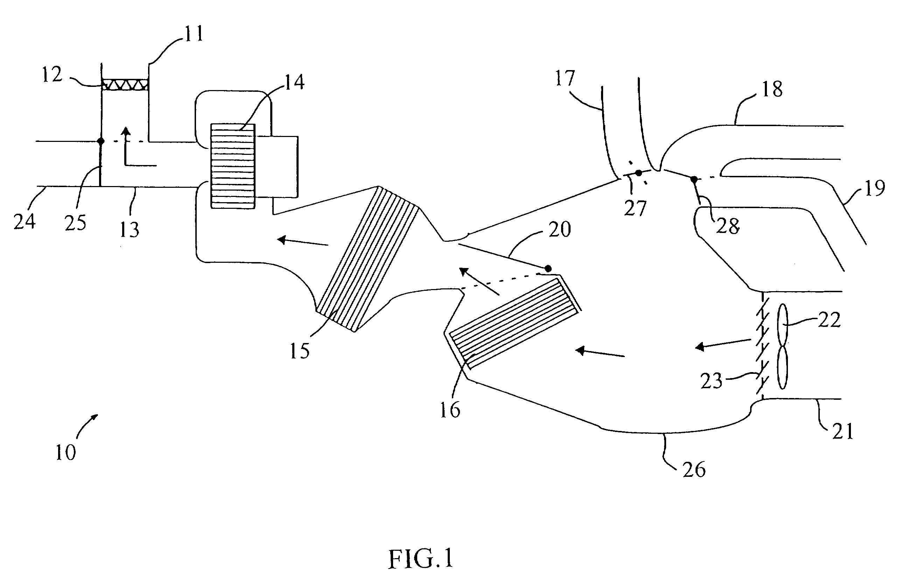

Sur la figure 1, on peut voir un dispositif 10 de ventilation, chauffage et climatisation d'un véhicule motorisé, comportant une prise d'air 11, à proximité de laquelle est placé un filtre 12. Cette prise d'air 11 est mise en relation par un conduit d'admission 13 avec un pulseur d'air 14, se composant généralement d'un ventilateur, puis avec un échangeur intérieur 15. Après son passage dans l'échangeur intérieur 15, l'air pénètre dans une chambre 26 comportant un aérotherme 16 et un volet 20 dit de mixage, qui permet de doser la portion de débit d'air passant par l'aérotherme 16. Ainsi, par exemple, lorsque l'utilisation de l'aérotherme 16 n'est pas requise, le volet 20 peut-il obstruer complètement le passage de l'air vers celui-ci. Le volet 20 est représenté en trait plein lorsqu'un débit maximal d'air est dirigé vers l'aérotherme 16, et en trait pointillé lorsque le passage de l'air vers l'aérotherme 16 est obstrué.

L'échangeur intérieur 15 est, de façon classique, relié à une boucle frigorifique comportant un échangeur extérieur, un compresseur et un détendeur (non représentés). Préférentiellement, cette boucle frigorifique peut fonctionner à la fois en mode pompe à chaleur, dans ce cas l'échangeur intérieur 15 joue le rôle de condenseur, et l'échangeur extérieur celui d'évaporateur, ou en mode climatisation, dans ce cas l'échangeur intérieur 15 joue le rôle d'évaporateur, et l'échangeur extérieur celui de condenseur. Toutefois, cette boucle frigorifique peut ne fonctionner que dans un seul des deux modes de fonctionnement précités.

De la chambre 26, partent les différents conduits de répartition d'air 17,18,19 permettant d'amener l'air dans différentes zones de l'habitacle du véhicule. L'air peut être amené au niveau des pieds du conducteur et du passager avant par un premier conduit de répartition 19, en zone frontale par un second conduit de répartition 18 qui peut raccorder la chambre 26 à différentes buses de soufflage (non représentées), et enfin à la base du pare-brise par un troisième conduit de répartition 17. Les conduits 17,18,19 sont équipés de volets de réglage 27,28 afin de contrôler les débits d'air dans les différents conduits de répartition 17,18,19. Sur les figures, deux positions possibles des volets de réglages 27,28 sont représentées respectivement en trait plein et en trait pointillé.

Le conduit d'admission 13 peut comporter un volet de recyclage 25 permettant d'orienter l'aspiration d'air, soit sur de l'air extérieur par la prise d'air 11, soit sur de l'air provenant de l'habitacle du véhicule par un conduit 24 relié à l'habitacle. Le volet de recyclage 25 est représenté en trait plein lorsque la totalité du débit d'air admis provient de l'extérieur du véhicule et en trait pointillé lorsque la totalité du débit provient du recyclage de l'air de l'habitacle.

Le fonctionnement du dispositif est le suivant : l'usager peut agir au moyen de commande, sur la vitesse de rotation du pulseur 14, pour faire varier le débit d'air soufflé, et sur les différents volets 27,28 pour orienter le débit selon la direction souhaitée. Par action sur le volet 20, l'usager peut influer sur la température de l'air soufflé. Les différents moyens pour piloter les volets 20,27,28 sont connus en soi et ne sont pas représentés. Les actions de l'usager peuvent être remplacées par des commandes issues d'un calculateur équipant me véhicule.

Lorsque l'échangeur intérieur 15 joue le rôle d'évaporateur, le dispositif 10 permet le refroidissement de l'air soufflé, et lorsqu'il joue le rôle de condenseur, il peut participer au chauffage de l'air soufflé en complément de l'aérotherme 16, ou assurer seul le chauffage.

Selon le premier mode de réalisation du dispositif 10 selon l'invention, un conduit auxiliaire 21 relie la chambre 26 à l'habitacle. Le conduit 21 débouche dans la chambre 26 en aval de l'aérotherme 16 pour un sens de circulation de l'air traditionnel. Ce conduit 21 comporte un ventilateur auxiliaire 22 adapté pour envoyer de l'air issu de l'habitacle dans la chambre 26. Des volets souples 23, placés entre le ventilateur auxiliaire 22 et la chambre 26 permettent d'isoler le conduit auxiliaire 21 lors du fonctionnement normal du dispositif, c'est-à-dire lorsque le pulseur 14 fonctionne et que le ventilateur auxiliaire 22 est à l'arrêt. Les volets souples 23 obstruent alors l'entrée du conduit auxiliaire 21. Selon une variante de ce premier mode de réalisation, le conduit auxiliaire 21 est relié à l'extérieur du véhicule plutôt qu'à l'habitacle, le dispositif 10 étant identique par ailleurs.

Lorsque le pulseur 14 est à l'arrêt, et que les volets de réglage 27,28 obstruent les différents conduits de répartition 17,18,19, la mise en route du ventilateur auxiliaire 22 soulève les volets souples 23 par contre-pression et permet alors d'extraire l'air de l'habitacle (ou de l'extérieur suivant la variante) et de l'envoyer dans la chambre 26. Selon la position du volet 20 de mixage, l'air peut alors éventuellement traverser l'aérotherme 16. Il passe ensuite au travers de l'échangeur intérieur 15, puis du filtre 12, via le conduit d'admission 13, le volet de recyclage 25 étant alors en position fermée, pour être finalement rejeté à l'extérieur du véhicule. Le parcours suivi par l'air est symbolisé par des flèches sur la figure 1. Les positions « ouvertes » et « fermées » des volets souples 23 sont représentées respectivement par des traits obliques et verticaux.

Les volets souples 23 peuvent être remplacés par des volets du même type que ceux utilisés à la base des conduits de distribution d'air 17,18,19. Dans ce cas, ils peuvent être pilotés par des moyens de commande non représentés.

La mise en route du ventilateur auxiliaire 22 permet donc une inversion du sens de circulation de l'air dans le dispositif 10 de ventilation, chauffage et climatisation.

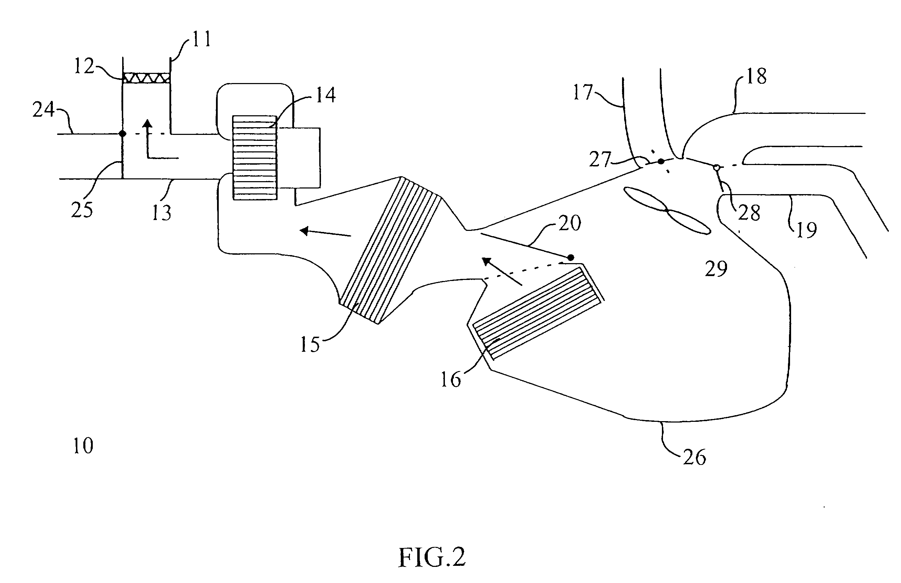

Le second mode de réalisation de la présente invention, représenté sur la figure 2, permet d'obtenir une inversion de la circulation de l'air dans le dispositif 10 sans toutefois nécessiter la présence d'un conduit auxiliaire 21 reliant la chambre 26 à l'habitacle du véhicule (ou à l'extérieur du véhicule).

Dans ce second mode de réalisation, un ventilateur auxiliaire 29 est placé dans la chambre 26, juste en amont des conduits de distribution 17,18,19. Le ventilateur 29 peut soit fonctionner dans un unique sens, soit être adapté pour pouvoir aspirer l'air dans les deux sens. Dans le premier cas, il est à l'arrêt lors d'un fonctionnement normal du dispositif 10, c'est-à-dire lorsque le pulseur 14 fonctionne. La conception du ventilateur 29 doit alors être optimisée de façon à créer le moins de perte de charge possible sur l'air.

Lorsque le pulseur 14 est à l'arrêt, et que le ventilateur auxiliaire 29 fonctionne, les volets de réglage 27,28 étant ouverts, il aspire de l'air issu de l'habitacle qu'il dirige au travers du conduit d'admission 13 vers l'extérieur du véhicule, provoquant ainsi l'inversion du sens de circulation de l'air dans le dispositif 10. La circulation de l'air est représentée schématiquement par des flèches sur la figure 2.

Dans le cas où le ventilateur auxiliaire 29 est adapté pour aspirer de l'air dans les deux sens, il peut, lors du fonctionnement normal du dispositif 10, aider le pulseur 14 dans son action d'aspiration de l'air extérieur ou recyclé. Lorsque le pulseur 14 est à l'arrêt, le changement du sens d'aspiration de l'air par le ventilateur auxiliaire 29 permet d'inverser le sens de circulation de l'air dans le dispositif 10, c'est-à-dire d'aspirer de l'air issu de l'habitacle par les conduits de répartition 17,18,19 et de le diriger vers l'extérieur du véhicule par le conduit d'admission 13.

Selon un troisième mode de réalisation de la présente invention, le ventilateur auxiliaire est placé dans l'un des conduits de distribution d'air ou à la sortie de l'un de l'un des conduits de distribution d'air, comme par exemple celui dirigeant l'air vers les pieds du conducteur et du passager avant du véhicule. Dans l'art antérieur, ce conduit peut déjà contenir un ventilateur, afin de compléter l'action du pulseur principal, servant à envoyer l'air dans la zone arrière de l'habitacle. Dans un tel cas, ce ventilateur fonctionnant dans un seul sens pourrait être remplacé par un ventilateur fonctionnant dans les deux sens et qui, lors du fonctionnement habituel du dispositif, compléterait l'action du pulseur principal, et qui, lors de l'arrêt du pulseur, permettrait d'inverser le sens de circulation de l'air dans le dispositif pour aspirer l'air de l'habitacle par le conduit de distribution de l'air et le rejeter à l'extérieur du véhicule au moyen du conduit d'admission.

Les trois modes de réalisation de l'invention permettent d'inverser le sens de circulation de l'air à travers la chambre du dispositif, pour le rejeter par le conduit d'admission. Ceci permet d'assécher l'échangeur intérieur lorsque le dispositif est à l'arrêt ou lors de la remise en route du dispositif, par exemple pendant une durée déterminée avant la mise en marche du pulseur. L'assèchement de l'évaporateur permet d'une part d'éviter l'envoi d'un air chargé d'humidité en direction de l'habitacle, susceptible de provoquer l'embuage des vitres, et permet d'autre part d'éviter la prolifération de bactéries sources d'odeurs. Pour faciliter l'assèchement de l'échangeur intérieur, il est possible d'utiliser les calories présentes dans l'aérotherme. En outre, si le circuit de refroidissement moteur, auquel est relié l'aérotherme, comporte une pompe à eau électrique, il est possible de tirer profit des calories de l'ensemble du circuit de refroidissement pour accélérer l'assèchement de l'échangeur, immédiatement après l'arrêt du moteur, ou après une durée déterminée.

En outre, lorsque la boucle frigorifique est utilisée comme pompe à chaleur, c'est-à-dire lorsque l'échangeur intérieur joue le rôle de condenseur, et l'échangeur extérieur celui d'évaporateur, le dispositif selon l'invention permet de dégivrer l'échangeur extérieur par une inversion du cycle frigorifique sans que soit envoyé de l'air refroidi dans l'habitacle.

De plus, lors de la régénération du filtre, le dispositif selon l'invention permet de faciliter la régénération par l'utilisation d'un flux d'air réchauffé, par l'aérotherme ou par l'échangeur intérieur fonctionnant comme condenseur, sans que cet air réchauffé ne soit envoyé à l'intérieur de l'habitacle.

Finalement, les trois modes de réalisation permettent d'évacuer vers l'extérieur du véhicule les calories accumulées dans la chambre et le conduit d'admission, lors, par exemple, d'une exposition prolongée du véhicule au soleil. Dans ce cas, le deuxième mode de réalisation permet avantageusement d'évacuer en plus les calories accumulées dans l'ensemble des conduits de répartition d'air, tandis que le troisième mode de réalisation permet, quant à lui, d'évacuer les calories accumulées dans le conduit de répartition où est placé le ventilateur supplémentaire, par exemple le conduit de répartition dirigeant l'air vers les pieds du conducteur et du passager avant.

La présente invention n'est nullement limitée au mode de réalisation décrit et illustré qui n'a été donné qu'à titre d'exemple. Au contraire, l'invention comprend tous les équivalents techniques des moyens décrits ainsi que leurs combinaisons si celles-ci sont effectuées suivant son esprit.

## Revendications

1. Dispositif (10) de ventilation, chauffage et/ou climatisation de véhicule motorisé comportant des premiers moyens d'aspiration d'air (14) pour aspirer de l'air par un conduit d'admission (13), et l'envoyer vers des moyens de traitement (15,16) de l'air aspiré propres à produire de l'air traité chaud ou climatisé, et au moins un conduit de répartition (17,18,19) de l'air dans l'habitacle du véhicule, caractérisé en ce qu'il comprend des seconds moyens d'aspiration d'air (22,29) adaptés pour pouvoir aspirer l'air de l'habitacle et/ou de l'extérieur du véhicule, lorsque les premiers moyens d'aspiration d'air (14) sont à l'arrêt.

2. Dispositif (10) de ventilation, chauffage et/ou climatisation selon la revendication 1, caractérisé en ce l'air aspiré par les seconds moyens d'aspiration d'air (22,29) est rejeté à l'extérieur du véhicule par le conduit d'admission (13).

3. Dispositif (10) de ventilation, chauffage et/ou climatisation selon l'une des revendications 1 ou 2, caractérisé en ce qu'il comprend un conduit auxiliaire (21) relié à l'habitacle et en ce que les seconds moyens d'aspiration d'air (22) aspirent l'air de l'habitacle par le conduit auxiliaire (21).

4. Dispositif (10) de ventilation, chauffage et/ou climatisation selon l'une des revendications 1 ou 2, caractérisé en ce qu'il comprend un conduit auxiliaire (21) relié à l'extérieur du véhicule et en ce que les seconds moyens d'aspiration d'air (22) aspirent l'air depuis l'extérieur du véhicule par le conduit auxiliaire (21).

5. Dispositif (10) de ventilation, chauffage et/ou climatisation selon la revendication 3, caractérisé en ce que le conduit auxiliaire (21) est équipé de volets souples (23) adaptés pour obstruer le conduit auxiliaire (21) au moins lorsque les premiers moyens d'aspiration d'air (14) fonctionnent et qui permettre le passage de l'air dans le conduit auxiliaire (21) sous l'action des seconds moyens d'aspiration d'air (22).

6. Dispositif de ventilation, chauffage et/ou climatisation selon la revendication 3, caractérisé en ce que le conduit auxiliaire (21) comporte des volets de réglage, actionnables par des moyens de manoeuvre, adaptés pour autoriser ou empêcher le passage de l'air dans le conduit auxiliaire (21) selon l'action exercée par les moyens de manoeuvre sur ceux-ci.

7. Dispositif de ventilation, chauffage et/ou climatisation selon l'une des revendications 1 ou 2, caractérisé en ce que les seconds moyens d'aspiration d'air (29) aspirent l'air directement par le ou les conduits de répartition (17,18,19).

8. Dispositif de ventilation, chauffage et/ou climatisation selon la revendication 6, caractérisé en ce qu'il comprend une chambre (26) d'où partent le ou les conduits de répartition d'air (17,18,19) et en ce que les seconds moyens d'aspiration d'air (22) sont situés à proximité de l'entrée du ou des conduits de répartition de l'air (17,18,19).

9. Dispositif de ventilation, chauffage et/ou climatisation selon l'une des revendications 1 ou 2, caractérisé en ce que les seconds moyens d'aspiration d'air sont disposés à l'intérieur ou à la sortie d'au moins un des conduits de répartition (17,18,19).

10. Dispositif de ventilation, chauffage et/ou climatisation selon l'une des revendications 6 à 8, caractérisé en ce que les seconds moyens d'aspiration d'air (29) sont adaptés pour pouvoir, en outre, compléter l'action des premiers moyens d'aspiration d'air (14) lorsque ceux-ci fonctionnent.
